# EUROPEAN PATENT APPLICATION

(11) **EP 1 498 724 A1**
(43) Date of publication of application: **19.01.2005**
(21) Application number: 04254091.4
(22) Date of filing: 08.07.2004
(51) Int. Cl.: G01N 21/90, B07C 5/34, B07C 5/36

(54) **Multi-machine inspection system with a single rejector**

(30) Priority: 18.07.2003 US 622765
(71) Applicant: Emhart Glass S.A., 6330 Cham (CH)
(72) Inventor: Furnas, William J., Elmira, New York 14901 (US)
(74) Representative: Warren, Anthony Robert

(57) **Abstract**

An inspection system includes a number of inspection machines (M₁, M₂, Mₙ) arranged in a row which sequentially inspect a bottle (10) as it is conveyed through the machines. The first machine (M₁) determines whether the bottle (10) should be rejected, and passes any reject signal via a hardwired connection to the next machine (M₂). Following the inspection of the bottle by the second machine (and each subsequent machine prior to the most downstream machine), that machine will pass a reject signal via a hardwired connection to the next machine if either that machine has rejected the bottle or a reject signal has been received from the next upstream machine. The same thing happens in the most downstream machine (Mₙ) except that a signal is sent to a rejector (18).

## Description

The present invention relates to machines which inspect containers such as bottles for defects, and more particularly to a system which includes a number of such machines collectively evaluating a bottle.

Machines for inspecting glass bottles conduct a great variety of inspections, including an inspection for the mold cavity data so that an operator will know where a defective bottle was made, and can promptly adjust the bottle making process to eliminate the problem at that mold. Conventionally, a single machine can only handle a limited number of inspections, and as a result a number of machines will sequentially receive the bottle to be inspected, and together all the required inspections will be completed.

Each machine has its own inspection system and will determine whether any processed bottle should be rejected. Often a rejector will be associated with each machine and the rejector will be controlled by the inspection system for that machine. Occasionally, a single rejector will be connected to the inspection system of all of the machines so that multiple rejectors can be avoided.

It is an object of the present invention to provide a system for inspecting glass containers which is defined by a number of machines which uses a single rejector and a much simplified reject process.

According to the present invention, there is provided a multi-machine system for inspecting containers as defined in claim 1.

The present invention will now be described with reference to the accompanying drawings, which illustrate a presently preferred embodiment incorporating the principles of the invention, and in which:-
Figure 1 is an elevational schematic view of a system for inspecting bottles;
Figure 2 is a logic diagram for the processor of the first machine in a multi-machine line;
Figure 3 is a logic diagram for the processor of a middle machine in a multi-machine line; and
Figure 4 is a logic diagram for the processor of the last machine in a multi-machine line.

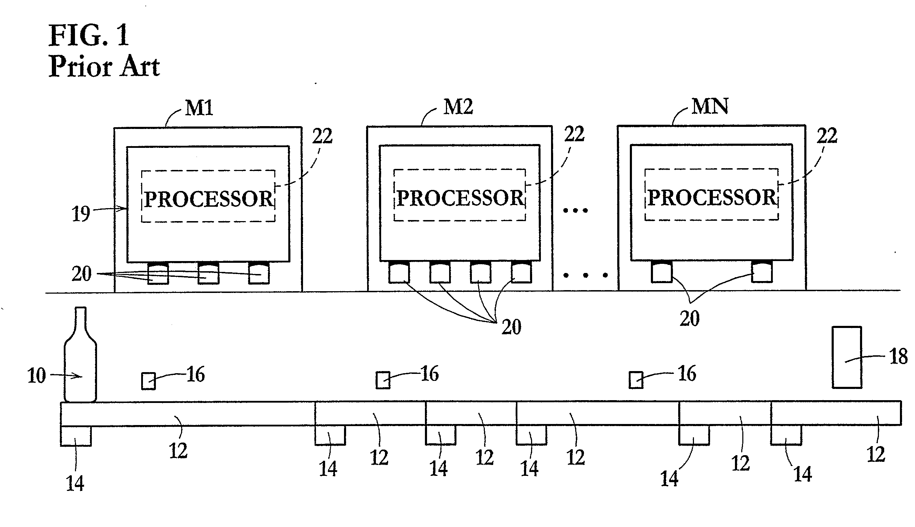

Figure 1 shows a number of inspection machines M1,M2,Mn which sequentially inspect a bottle 10. The bottle is conveyed through the machines via any number of conveyors 12 which could include belt conveyors which support the bottom of a bottle or devices which have opposed pairs of belts which grip the side wall of a bottle, for example. An encoder 14 is associated with each conveyor so that the position of a bottle can be tracked through the machine. Also present at the entry of each machine is a part present sensor 16, and a rejector 18 is located following the discharge of a bottle from the last machine.

Each machine has an inspection system 19 which includes a number of inspection stations 20 (more than one inspection could be performed at a single station) and a processor 22 which will identify a specific bottle that should be rejected when one or more of the inspections shows a defective bottle.

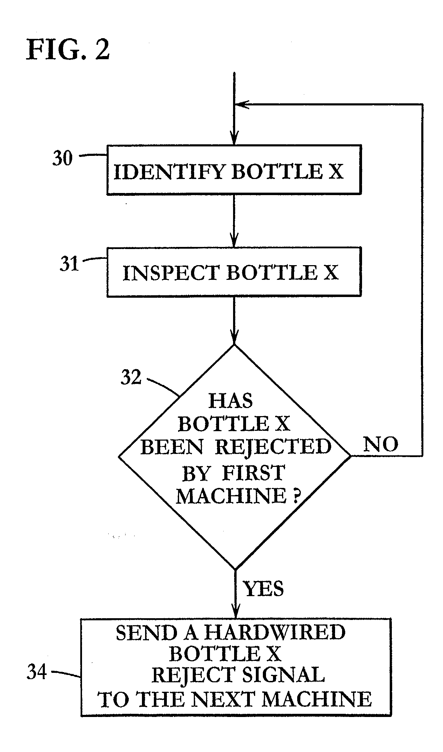

As can be seen in Figure 2, the processor in the first machine of a multi-machine line will Identify Bottle "X" 30 (each bottle) as it passes the part present sensor and will Inspect Bottle "X" 31. At the completion of the inspection processes carried out by the first machine, the processor will know whether or not any of the inspections carried out by that machine indicate that the bottle should be rejected. Where the query "Has Bottle "X" Been Rejected By First Machine?" 32 been answered in the affirmative, the processor will Send A Hardwired Bottle "X" Reject Signal To The Next Machine 34.

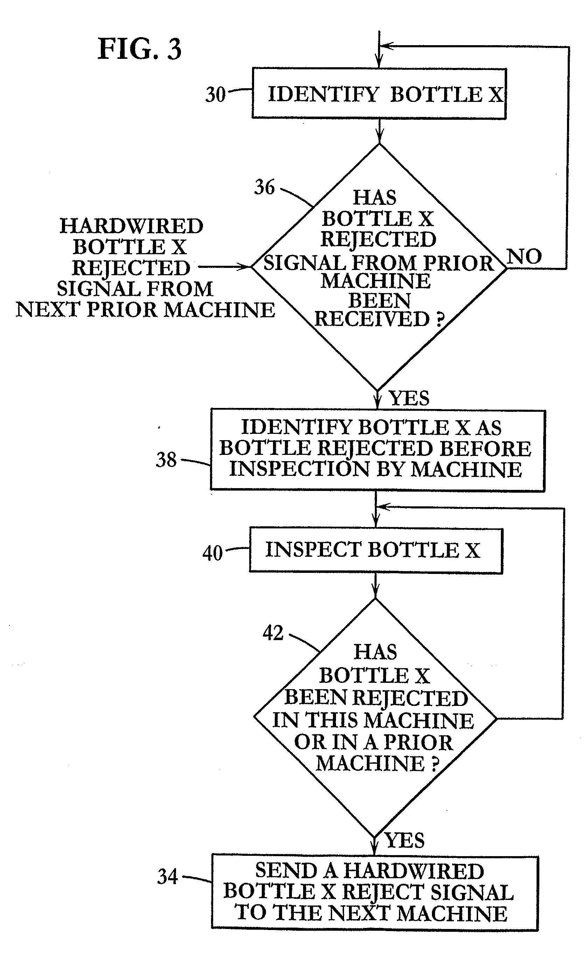

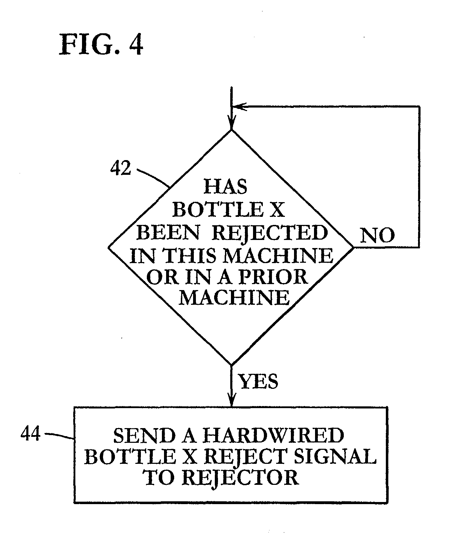

As can be seen in Figure 3, the processor in a middle machine of a multi-machine line will Identify Bottle "X" 30 (each bottle) as it passes the part present sensor. The processor receives a Hardwired Bottle "X" Reject Signal from The Next Prior Machine, and where the query "Has Bottle "X" Rejected Signal From Prior Machine Been Received?" 36 been answered in the affirmative, the processor will Identify Bottle "X" As Bottle Rejected Before Inspection By Machine 38, and will Inspect Bottle "X" 40. Now, if the processor answers the query "Has Bottle "X" Been Rejected In This Machine Or In A Prior Machine?" 42 in the affirmative, the processor will Send Hardwired Bottle "X" Reject Signal To The Next Machine 34. The process will be the same for the last machine of a multi-line machine, except that when the processor answers the query "Has Bottle "X" Been Rejected In This Machine Or In A Prior Machine?" 42 (Figure 4) in the affirmative, the processor will Send A Hardwired Bottle "X" Reject Signal To Rejector 44.

## Claims

1. A multi-machine system for inspecting containers comprising at least one upstream machine and a downstream most machine, wherein each machine performs at least one inspection on a container and a container is conveyed sequentially through the machines and then to a rejector, comprising
a processor for each machine to determine whether a container is defective and should be rejected,
a hardwired connection between each upstream processor and the next downstream processor,
a connection between the downstream most processor and the rejector,
said processors of the upstream machines each comprising means for supplying to the hardwired connection between the processor and the next downstream processor, a container rejected signal in the event that either the processor has determined that the container is to be rejected, or, where there is an next upstream machine, the processor has received a container reject signal from the next upstream machine, and
said processor of the downstream most machine comprising means for supplying a container rejected signal to the rejector in the event that either the processor has determined that the container is to be rejected, or the processor has received a container reject signal from the next upstream machine.
